# EUROPÄISCHE PATENTSCHRIFT

(11) **EP 3 785 521 B1**
(45) Veröffentlichungstag und Bekanntmachung des Hinweises auf die Patenterteilung: **15.03.2023**
(21) Anmeldenummer: 20000301.0
(22) Anmeldetag: 20.08.2020
(51) Int. Cl.: A01F 15/07

(54) **LANDWIRTSCHAFTLICHE BALLENPRESSE MIT EINER BINDUNG UND VERFAHREN ZUM WARTEN DER BALLENPRESSE**
AGRICULTURAL BALER WITH A BINDING AND METHOD FOR MAINTAINING THE BALER
PRESSE À BALLES AGRICOLE DOTÉE DE NOUAGE ET PROCÉDÉ D'ENTRETIEN DE LA PRESSE À BALLES

(30) Priorität: 28.08.2019 DE 102019006056
(43) Veröffentlichungstag der Anmeldung: 03.03.2021
(73) Patentinhaber: Maschinenfabrik Bernard Krone GmbH & Co. KG, 48480 Spelle (DE)
(72) Erfinder: KRACHT, Katharina, 49832 Andervenne (DE)
(74) Vertreter: Büscher, Christel Hedwig

(56) Entgegenhaltungen:
- EP-A1- 0 252 485
- EP-A1- 2 517 550
- EP-A2- 0 865 721
- EP-B1- 0 252 485
- DE-A1-102004 027 307

## Beschreibung

Die vorliegende Erfindung betrifft eine landwirtschaftliche Ballenpresse mit einer Presskammer zum Pressen von Erntegut in einen Ballen, mit einer Bindung mit mindestens einer Bindeeinheit, die einen Aufnahmeraum zur Aufnahme einer Bindemittelrolle aufweist, dessen entrolltes Bindemittel zum Binden des gepressten Ballens vorgesehen ist, wobei die Bindeeinheit von einer in einem Betriebszustand der Ballenpresse vorgesehenen Betriebsposition in eine in einem Wartungszustand vorgesehene Wartungsposition verschwenkbar ist. Die vorliegende Erfindung betrifft weiterhin einen landwirtschaftlichen Arbeitszug mit einer Zugmaschine, an die eine solche Ballenpresse angehängt ist. Die vorliegende Erfindung betrifft weiterhin ein Verfahren zum Einsetzen einer Bindemittelrolle in einen Aufnahmeraum einer Bindeeinheit einer landwirtschaftlichen Ballenpresse.

Zur Volumenverringerung und zur Verbesserung der Handhabbarkeit wird Erntegut wie Stroh und Heu regelmäßig zu Ballen gepresst. Damit ein gepresster Ballen sich nicht lösen und auseinander fallen kann, wird er mit einem Bindemittel gebunden. Als Bindemittel kommen dabei Bänder, Netze und Folien aus gewebten oder geflochtenen Naturfasern oder Kunststoff zum Einsatz. Die Bindemittel werden beispielsweise in Abhängigkeit von der Form, Größe, Pressdichte oder Verwendung des Ballens oder vom Erntegut ausgewählt.

Ballenpressen weisen daher regelmäßig eine Bindung mit einer Bindeeinheit zur Aufnahme einer Bindemittelrolle auf. Das von der Bindemittelrolle entrollte Bindemittel kann von der Bindeeinheit aus in die Presskammer eingeführt und dann zum Binden des gepressten Ballens genutzt werden.

Zum Auswechseln des Bindemittels, beispielsweise weil das Bindemittel der Bindemittelrolle verbraucht ist oder ein anderes Bindemittel zum Einsatz kommen soll, muss die Bindemittelrolle der Bindeeinheit entnommen und eine andere Bindemittelrolle in die Bindeeinheit eingelegt werden.

Um den Wartungsaufwand auf dem Feld möglichst gering zu halten, weisen Bindemittelrollen jedoch eine große Lauflänge und daher ein erhebliches Gewicht auf. Bindeeinheiten zur Aufnahme der Bindemittelrollen sind zudem oftmals sehr hoch über dem Boden angeordnet, so dass die Bindemittelrollen beim Austausch in eine Höhe über die Taille oder sogar über die Schulter eines Bedieners angehoben werden müssen und ihr Austausch daher nicht nur eine erhebliche körperliche Belastung darstellt, sondern auch sehr gefährlich sein kann. Zudem ist das Einfädeln des Bindemittels in Zuführmittel, mit denen es in die Presskammer geleitet wird, bei hoch über dem Boden angeordneter Positionierung der Bindemittelrolle schwierig und zeitaufwändig.

Um das Einlegen einer Bindemittelrolle in die Rollenaufnahme zu erleichtern, werden oftmals Hebevorrichtungen eingesetzt. Jedoch erfordert das Einfädeln des Bindemittels in die Zuführmittel bei solchen Lösungen oftmals eine Leiter oder ein Podest, so dass der Bediener diese Arbeit zwar von einer erhöhten Position aus durchführen kann. Jedoch bleibt dadurch eine Gefährdung des Bedieners bestehen und das Einfädeln des Bindemittels ist weiterhin aufwändig.

Bekannt ist auch der Einsatz von Magazinen, in denen mehrere Bindemittelrollen bevorratet sind. Solche Magazine vereinfachen zwar den Austausch der Bindemittelrolle selbst, ermöglichen aber nicht den Wechsel zwischen verschiedenen Bindemittelmaterialien, wenn eine aktuelle Bindemittelrolle noch nicht vollständig aufgebraucht ist. Zudem kann das Einfädeln des Bindemittels aufgrund des durch das Magazin beanspruchten Bauraums sogar noch erschwert sein.

Weiterhin bekannt sind Ballenpressen mit zwei Bindeeinheiten, bei denen die eingelegten Bindemittel nacheinander oder gleichzeitig nutzbar sind. Neben dem größeren zur Verfügung stehenden Bindemittelvorrat ermöglichen diese Lösungen eine größere Flexibilität bezüglich der Nutzung verschiedener Bindemittelmaterialien. Die Druckschrift EP 1 707 045 A1 offenbart einen Träger zur Aufnahme einer Bindemittelrolle, der zwischen einer Ladestellung und einer Betriebsstellung bewegbar ist. Die Druckschrift EP 0 252 485 A1 offenbart einen Aufnahmeraum für eine Bindemittelrolle, der von einer Betriebsposition in eine Wartungsposition verschwenkbar ist. Mit dem Aufnahmeraum werden eine Streckwalze sowie eine Antriebsrolle mit verschwenkt. Die Druckschrift DE 10 2004 027 307 A1 offenbart eine Schnellwechseleinrichtung zum Austausch von Materialbahnrollen, die an einer Zugdeichsel angeordnet ist.

Aufgabe der Erfindung ist es demgegenüber, eine landwirtschaftliche Ballenpresse, insbesondere eine Rundballenpresse, zu schaffen, die eine möglichst große Flexibilität in Bezug auf das verwendete Bindemittelmaterial ermöglicht, und deren Handhabung, insbesondere im Wartungsfall, zudem für den Bediener mit weniger Gefahren verbunden sowie leichter, einfacher und schneller ist.

Die Aufgabe wird gelöst mit einer landwirtschaftlichen Ballenpresse mit den Merkmalen des unabhängigen Patentanspruchs 1, einem landwirtschaftlichen Arbeitszug mit den Merkmalen des unabhängigen Patentanspruchs 12 sowie mit einem Verfahren mit den Merkmalen des unabhängigen Patentanspruchs 13. Vorteilhafte Ausführungsformen sind den abhängigen Ansprüchen entnehmbar.

Dafür wird eine landwirtschaftliche Ballenpresse geschaffen. Die Ballenpresse umfasst eine Presskammer, in der Erntegut zu einem Ballen gepresst wird. Dafür weist sie einen Aufnahmerotor auf, der zum Aufnehmen des Ernteguts vom Boden vorgesehen ist. Als Aufnahmerotor ist eine Pick-up bevorzugt. Weiterhin umfasst sie einen Einzugsrotor zum Fördern des Ernteguts in die Presskammer. Der Einzugsrotor kann als Förderrotor, Schneidrotor oder Integralrotor ausgebildet sein. In der Presskammer sind Pressorgane, beispielsweise Presswalzen und/oder Pressriemen, angeordnet, mit denen das Erntegut zum Ballen pressbar ist.

Die Ballenpresse ist bevorzugt eine Rundballenpresse, die das Erntegut zu einem etwa zylindrischen Ballen presst. Dabei sind sowohl als Riemenpresse ausgebildete Rundballenpressen als auch als Walzenpresse ausgebildete Rundballenpressen bevorzugt.

Um den gepressten Ballen binden zu können, weist die Ballenpresse eine Bindung mit mindestens einer Bindeeinheit auf. Die Bindeeinheit umfasst einen Aufnahmeraum zur Aufnahme einer Bindemittelrolle. Das von der Bindemittelrolle entrollte Bindemittel ist zum Binden, insbesondere zum Umschlingen, des gepressten Ballens vorgesehen. Das Binden verhindert ein Lösen von Erntegut von dem Ballen.

Die Bindeeinheit ist weiterhin von einer in einem Betriebszustand vorgesehenen Betriebsposition in eine zum Einlegen der Bindemittelrolle vorgesehene Wartungsposition verstellbar.

Dabei befindet sich die Ballenpresse während der Ballenbildung, das heißt während des Pressens des Ernteguts zum Ballen und des Bindens des gepressten Ballens, im Betriebszustand.

Im Wartungszustand wird die Presskammer hingegen nicht angetrieben, so dass weder Erntegut noch Bindemittel in die Presskammer gefördert wird und die in der Presskammer vorgesehenen Pressorgane still stehen. Der Wartungszustand ist zum Einsetzen einer Bindemittelrolle vorgesehen, beispielsweise zum erstmaligen Laden der Bindemittelrolle, oder weil die in der Bindeeinheit aktuell aufgenommene Bindemittelrolle durch eine andere ersetzt werden soll, sei es weil sie leer ist, oder weil sie durch eine Bindemittelrolle eines anderen Bindemittelmaterials ersetzt werden soll.

Die landwirtschaftliche Ballenpresse zeichnet sich dadurch aus, dass sie zwei Bindeeinheiten aufweist, die in ihrer Betriebsposition in mindestens eine Raumrichtung zueinander versetzt angeordnet sind, wobei beide Bindeeinheiten in dieselbe Wartungsposition verstellbar sind. Prinzipiell können auch noch weitere Bindeeinheiten vorgesehen sein.

Durch das Vorsehen von zwei Bindeeinheiten ist zum Binden der Ballen auf dem Feld die doppelte Menge Bindemittel unmittelbar verfügbar. In Bezug auf einen erforderlichen Austausch der Bindemittelrollen kann die Ballenpresse daher bei dieser Ausführungsform doppelt so lange betrieben werden.

Alternativ können zwei Bindemittelrollen verschiedener Bindemittelmaterialien nacheinander oder gleichzeitig genutzt werden, beispielsweise eine Bindemittelrolle mit einer Folie aus Kunststoff als Bindemittel und eine Bindemittelrolle mit einem Netz aus Naturfaser und/oder Kunststoff als Bindemittel. Dies ermöglicht dem Bediener auf dem Feld eine sehr große Flexibilität in Bezug auf die Wahl des verwendeten Bindemittelmaterials. Dafür sind die Bindeeinheiten bevorzugt autark nutzbar. Sie können im Wesentlichen, d. h. bezüglich ihrer die Bindemittelrolle sowie das entrollte Bindemittel betreffenden Funktionselemente, baugleich ausgebildet sein.

Durch das Vorsehen derselben Wartungsposition ist die Bedienung der gesamten Bindung, insbesondere beider Bindeeinheiten, vereinheitlicht. Dadurch ist die Bedienung für den Bediener viel einfacher. Dies gilt vor allem auch für das Einfädeln des Bindemittels in die Zuführeinheit. Zudem können zum Befüllen beider Bindeeinheiten mit einer Bindemittelrolle dieselben Hilfsmittel genutzt werden.

Vorzugsweise sind die Bindeeinheiten zumindest in vertikaler Richtung zueinander versetzt angeordnet. Zudem können sie in Fahrtrichtung zueinander versetzt sein. Vorzugsweise ist der oder sind die Bindeeinheiten in vertikaler Richtung oberhalb einer Deichsel positioniert.

Bevorzugt weist die Bindeeinheit zumindest eine erste Umlenkrolle und/oder eine Zuführeinheit auf, die gemeinsam mit ihr von der Betriebsposition in die Wartungsposition verschwenkbar ist.

Dadurch wird nicht nur der Aufnahmeraum sondern auch die erste Umlenkrolle und/oder die Zuführeinheit in die Wartungsposition verschwenkt. Insgesamt ist das Einsetzen oder Ersetzen der Bindemittelrolle für den Bediener dadurch erheblich sicherer, einfacher und schneller möglich. Zudem ist auch das Einfädeln des Bindemittels in die Zuführeinheit für den Bediener erheblich sicherer, einfacher und schneller durchführbar.

Dafür ist es bevorzugt, dass ein Abstand der Bindeeinheit vom Boden in der Wartungsposition geringer als in der Betriebsposition ist. Vorzugsweise ist der Abstand der Bindeeinheit vom Boden in der Wartungsposition etwa in Hüfthöhe eines durchschnittlich gebauten Menschen angeordnet. Besonders bevorzugt beträgt der Abstand der Bindeeinheit vom Boden in der Wartungsposition etwa 0,7m - 1,5m, ganz besonders bevorzugt etwa 0,9m - 1,2m. Dadurch sind die Bindeeinheit sowie die Zuführeinheit für den Bediener leicht zugänglich und der Bediener benötigt dann keine Leiter oder kein Podest zum Einfädeln des Bindemittels in die Zuführeinheit. Die Verletzungsgefahr für den Bediener ist aufgrund der geringeren Höhe ebenfalls deutlich verringert. Zudem ist die Handhabung der schweren Bindemittelrolle, insbesondere das Einlegen in die Bindeeinheit, erheblich leichter und sicherer möglich als oberhalb der Hüft- oder sogar Schulterhöhe.

Die erste Umlenkrolle ist bevorzugt ortsfest in der Bindeeinheit angeordnet. Weiterhin bevorzugt weist sie eine haftende Oberfläche (nicht gezeigt) auf. Dafür kann sie zumindest teilweise aus einem elastischen Material gefertigt sein. Dadurch kann sie zum Abbremsen des Bindemittels genutzt werden. In einer bevorzugten Ausführungsform ist sie, insbesondere automatisch mittels einer Steuerungseinheit der landwirtschaftlichen Arbeitsmaschine, abbremsbar.

Eine Zuführeinheit im Sinne der Erfindung ist zum Führen und/oder Transportieren des Bindemittels zum Pressraum vorgesehen. Dafür kann sie Hilfsmittel vorsehen, mit dem das Bindemittel zum Pressraum transportierbar ist. Die Zuführeinheit ist dafür bevorzugt in Fahrtrichtung hinter dem Aufnahmeraum angeordnet.

Um ein kontinuierliches Abwickeln des Bindemittels während des Bindens des Ballens zu gewährleisten, ist es bevorzugt, dass die Zuführeinheit mindestens eine Umlenkrolle als Hilfsmittel zum Umlenken des Bindemittels umfasst. Das Bindemittel kann leicht manuell vom Bediener um die Umlenkrolle gelegt werden. Vorzugsweise ist die Umlenkrolle ortsveränderlich vorgesehen, so dass das Bindemittel bei seinem Zuführen zum Pressraum gemeinsam mit dieser geführt wird.

Die Zuführeinheit umfasst weiterhin bevorzugt als Hilfsmittel einen Zuführschnabel, in den das entrollte Bindemittel einfädelbar ist. Der Zuführschnabel ist zum Einführen des Bindemittels in die Presskammer vorgesehen. Er weist bevorzugt zwei einander gegenüber liegend angeordnete Leitbleche auf. Die Leitbleche sind weiterhin bevorzugt durch einen sich vorzugsweise in Einführrichtung des Bindemittels verjüngenden Zuführspalt voneinander beabstandet. Sie können zumindest teilweise aus einem flexiblen Material gefertigt sein. Beim Einfädeln des Bindemittels in die Zuführeinheit wird dieses bevorzugt mittels weiterer Hilfsmittel und/oder automatisch durch den Zuführspalt geführt. Es kann auch ein manuelles Einfädeln des Bindemittels durch den Zuführspalt vorgesehen sein.

Auch der Zuführschnabel ist bevorzugt ortsveränderlich vorgesehen, so dass das Bindemittel bei seinem Zuführen zum Pressraum gemeinsam mit diesem geführt wird.

Mit dem Zuführschnabel und/oder der Umlenkrolle wird das Bindemittel beim Transport zum Pressraum gehalten. Dadurch entgleitet es der Zuführeinheit dabei nicht.

Um das Bindemittel im Weiteren in die Presskammer einzuführen, ist es außerdem bevorzugt, dass die landwirtschaftliche Ballenpresse ein automatisch angetriebenes Verstellmittel zum Verstellen des Zuführschnabels sowie eine Führungskulisse umfasst, wobei der Zuführschnabel durch Antreiben des Verstellmittels entlang der Führungskulisse verstellt wird. Das Verstellmittel kann dabei als Hebel ausgebildet sein. Zusätzlich oder alternativ kann aber auch ein anderes, beispielsweise lineares automatisches Verstellen des Zuführschnabels vorgesehen sein. Durch das automatische Verstellen des Zuführschnabels wird das Bindemittel ohne weiteren Aufwand für den Bediener in die Presskammer geleitet. Dadurch muss sich der Bediener nicht in die Ballenpresse beugen.

Die Zuführeinheit ist in der Wartungsposition der Bindeeinheit bevorzugt in einer Grundposition angeordnet, in der die Umlenkrolle sowie der Zuführschnabel leicht zugänglich sind. Durch Antrieb des Verstellmittels wird die Zuführeinheit in eine Arbeitsposition verstellt, in der das Bindemittel in die Presskammer eingeleitet wird und dort zum Binden des Ballens zur Verfügung steht. Dieses Einführen des Bindemittels in die Presskammer kann automatisch, insbesondere nach Erreichen eines gewünschten oder maximalen Ballendurchmessers, erfolgen.

Die Bindeeinheit ist bevorzugt durch Verschieben und/oder Verschwenken von seiner Betriebsposition aus in die Wartungsposition verstellbar. Sie ist um eine ihr zugeordnete Schwenkachse von seiner Betriebsposition aus in die Wartungsposition verschwenkbar.

Die Ballenpresse kann als selbstfahrende Ballenpresse ausgebildet sein. In einer bevorzugten Ausführungsform weist die landwirtschaftliche Ballenpresse aber eine Deichsel auf, mit der sie an ein Zugfahrzeug anhängbar ist, wobei die Bindeeinheit in der Wartungsposition so an der Deichsel angeordnet ist, dass die Deichsel an den Aufnahmeraum angrenzt.

Diese Positionierung ermöglicht das Ablegen der in den Aufnahmeraum der Bindeeinheit aufgenommenen Bindemittelrolle auf die Deichsel. Auf der Deichsel ist die Bindemittelrolle sehr sicher gelagert, so dass der Bediener sich dem Einfädeln des Bindemittels in die Zuführeinheit widmen kann, ohne durch die Bindemittelrolle belastet oder gefährdet zu sein. Vorzugsweise weist die Deichsel dafür mindestens eine Auflage auf, auf die die Bindemittelrolle ablegbar ist.

Die Bindeeinheit weist bevorzugt Seitenwände, insbesondere als Staubschutz, auf. Vorzugsweise sind der Aufnahmeraum sowie die Zuführeinheit zwischen den Seitenwänden angeordnet. Die Bindemittelrolle wird bevorzugt in einer Wanne der Bindeeinheit gelagert, die vorzugsweise abgerundet geformt ist und sich zudem bevorzugt zwischen den Seitenwänden erstreckt.

Um die Bindemittelrolle in die Bindeeinheit einlegen zu können, weist diese bevorzugt eine Ausnehmung auf, durch die der Aufnahmeraum von außen zugänglich ist. Bevorzugt ist die Ausnehmung durch eine Abdeckung zumindest teilweise verschließbar. Alternativ oder zusätzlich kann ein Sicherungsbügel zum Halten der Bindemittelrolle im Aufnahmeraum vorgesehen sein.

In einer besonders bevorzugten Ausführungsform ist die Bindemittelrolle in den Aufnahmeraum einschiebbar. Um die Bindemittelrolle zudem auf die Deichsel ablegen zu können, ist es weiterhin bevorzugt, dass sich eine Einschubrichtung, in der die Bindemittelrolle in den Aufnahmeraum einschiebbar ist, quer zur Fahrtrichtung erstreckt. Der Aufnahmeraum erstreckt sich dabei ebenfalls bevorzugt in Einschubrichtung. Bei dieser Ausführungsform ist es auch bevorzugt, dass die Seitenwände eine Erstreckungskomponente in Fahrtrichtung aufweisen. Weiterhin ist es bei dieser Ausführungsform bevorzugt, dass zumindest eine der Seitenwände, besonders bevorzugt beide Seitenwände, den Aufnahmeraum nicht quer zur Einschubrichtung begrenzen, oder dass zumindest eine der Seitenwände, besonders bevorzugt beide Seitenwände, die Ausnehmung zum Aufnahmeraum aufweist.

Diese Ausführungsform ermöglicht nicht nur das Einschieben der Bindemittelrolle in Einschubrichtung in den Aufnahmeraum, sondern zudem das Ablegen der Bindemittelrolle auf die Deichsel bzw. die dafür vorgesehene Auflage. Um das Verschieben in oder gegen die Einschubrichtung der Bindemittelrolle auf der Deichsel zu erleichtern ist es außerdem bevorzugt, die Auflage mit Rollen zu versehen. Ein besonders sicheres Ablegen der Bindemittelrolle auf die Deichsel kann mit zumindest zwei solchen, insbesondere in Einschubrichtung fluchtend zueinander angeordneten, Auflagen erreicht werden.

Dabei ist es bevorzugt, dass die Bindeeinheit durch Verschwenken um eine ihr zugeordnete Schwenkachse von seiner Betriebsposition aus in die Wartungsposition verschwenkbar ist. Dafür ist in wenigstens einer Seitenwand der Bindeeinheit bevorzugt ein Schwenkmittel, beispielsweise eine Aufnahme für eine Welle oder für einen Achsstummel, vorgesehen. Weiterhin bevorzugt ist die Bindeeinheit durch Verschwenken um seine Schwenkachse auf die Deichsel absenkbar. In Abhängigkeit von ihrer Position relativ zur Deichsel ist aber auch eine Kombination aus einer Schiebe- und einer Schwenkbewegung zu ihrem Verstellen von seiner Betriebsposition in die Wartungsposition bevorzugt.

Bevorzugt wird zum Verschwenken der Bindeeinheit ein Aktuator genutzt. Als Aktuator kann dabei ein elektrischer, hydraulischer oder elektrohydraulischer Antrieb vorgesehen sein, insbesondere ein (elektro-) hydraulischer Zylinder oder ein Linearantrieb. Das Verstellen kann dabei halb- oder vollautomatisch erfolgen. Dafür sind weiterhin bevorzugt Sensoren zum Erfassen der aktuellen Position der Bindeeinheit vorgesehen. Denkbar ist aber auch ein manuelles Verstellen der Bindeeinheit.

Besonders bevorzugt ist die Bindeeinheit oder sind die Bindeeinheiten in vertikaler Richtung oberhalb der Deichsel angeordnet. Dadurch steht der Bauraum unterhalb sowie auf Höhe der Deichsel für den Aufnahmerotor und/oder den Einzugsrotor zur Verfügung. Zudem kann durch diese Position der Bindeeinheit oder der Bindeeinheiten die Gewichtskraft des Bindemittels beim Führen in die Presskammer sowie beim Binden des Ballens vorteilhaft genutzt werden.

Als Hilfsmittel zum Befüllen einer Bindeeinheit mit einer Bindemittelrolle umfasst die Bindung bevorzugt zumindest einen Rollenträger. Der Rollenträger dient als Lager für eine (Ersatz-) Bindemittelrolle. Es ist bevorzugt, dass der Rollenträger von einer im Betriebszustand vorgesehenen Lagerposition in eine im Wartungszustand vorgesehene Austauschposition verstellbar ist. In der Austauschposition ist eine am Rollenträger angeordnete Bindemittelrolle in den Aufnahmeraum der in der Wartungsposition angeordneten Bindeeinheit einschiebbar. Vorzugsweise ist die Bindemittelrolle vom Rollenträger aus durch Verschieben in eine Einschubrichtung in den Aufnahmeraum der Rollenaufnahme, einschiebbar.

Bevorzugt ist der Rollenträger von der Lagerposition in die Austauschposition verschwenkbar und/oder verschiebbar vorgesehen. Besonders bevorzugt weist er dafür einen Schwenkarm auf, der weiterhin bevorzugt am Rahmen der Ballenpresse gelagert ist.

In seiner Lagerposition ist der Rollenträger bevorzugt quer zur Austauschposition angeordnet, insbesondere etwa in Fahrtrichtung, so dass eine Breite der Ballenpresse durch die Rollenträger nicht vergrößert ist. Dabei kann die Austauschposition vorzugsweise durch ein Schwenken des Schwenkarms um eine im Wesentlichen vertikale Achse erreicht werden.

Auch das Verstellen des Rollenträgers kann halb- oder vollautomatisch oder manuell erfolgen. Die halb- oder vollautomatische Ausführungsform sieht bevorzugt Aktoren, beispielsweise elektrische und/oder hydraulische Antriebe, und gegebenenfalls Sensoren zum Erfassen der Position des Rollenträgers vor.

In einer besonders bevorzugten Ausführungsform umfasst die Bindung zwei Rollenträger, die an gegenüberliegenden Seiten der Ballenpresse angeordnet sind. Dadurch kann mehr Bindemittel bevorratet werden. Zudem können so verschiedene Bindemittel, beispielsweise eine Folienrolle sowie eine Netzrolle, bevorratet werden.

Die Aufgabe wird weiterhin gelöst mit einem landwirtschaftlicher Arbeitszug, umfassend eine solche Ballenpresse sowie eine Zugmaschine, an der die Ballenpresse angehängt ist. Der landwirtschaftliche Arbeitszug zeichnet sich dadurch aus, dass die Zugmaschine ein Betätigungsmittel zum reversiblen Verstellen der Bindeeinheit oder der Bindeeinheiten von der Betriebsposition in die Wartungsposition aufweist. Bevorzugt ist das Betätigungsmittel im Cockpit der Zugmaschine angeordnet. Dadurch kann der Bediener das Verstellen der Bindeeinheit oder der Bindeeinheiten, beispielsweise bei leerer Bindemittelrolle, im Cockpit auslösen. Zusätzlich oder alternativ können Betätigungsmittel zum reversiblen Verstellen der Bindeeinheit oder der Bindeeinheiten von ihrer Betriebsposition in die Wartungsposition auch an der Ballenpresse selbst, insbesondere nahe der Deichsel und/oder der Bindeeinheit oder der Bindeeinheiten, angeordnet sein.

In einer weiteren bevorzugten Ausführungsform weisen die Zugmaschine und/oder die Ballenpresse Betätigungsmittel zum Verstellen des oder der Rollenträger von der Lagerposition in die Austauschposition und/oder zurück auf.

Die Aufgabe wird weiterhin gelöst mit einem Verfahren zum Einsetzen einer Bindemittelrolle in einen Aufnahmeraum einer Bindeeinheit einer Ballenpresse. Das Verfahren umfasst die Schritte:
a) Verschwenken, der Bindeeinheit von der Betriebsposition in die Wartungsposition, so dass die Deichsel am oder im Aufnahmeraum der Bindeeinheit angeordnet ist,
b) Einschieben der Bindemittelrolle in Einschubrichtung in den Aufnahmeraum, wobei die Bindemittelrolle auf die Deichsel abgelegt wird, und
c) Zurückschwenken, der Bindeeinheit von der Wartungsposition in die Betriebsposition.

Der Bediener ist durch das Ablegen der Bindemittelrolle auf die Deichsel erheblich entlastet.

Das Verfahren kann zwischen den Schritten a) und b) gegebenenfalls den Schritt umfassen:
d) Entnehmen einer noch in der Bindeeinheit angeordneten Bindemittelrolle, insbesondere durch Verschieben in oder gegen die Einschubrichtung.

Bevorzugt umfasst das Verfahren zwischen den Schritten b) und c) zudem den Schritt:
e) Einfädeln des Bindemittels in eine Zuführeinheit.

Aufgrund der guten Zugänglichkeit der Zuführeinheit in der Wartungsposition der Bindeeinheit ist das Einfädeln für den Bediener einfach und schnell durchführbar.

Insgesamt ist das Ersetzten oder Einsetzen einer Bindemittelrolle für den Bediener bei dieser Ballenpresse sehr schnell und komfortabel möglich.

Im Folgenden wird die Erfindung anhand von Figuren beschrieben. Die Figuren sind lediglich beispielhaft und schränken den allgemeinen Erfindungsgedanken nicht ein. Es zeigen
- Fig. 1: schematisch eine erfindungsgemäße Ballenpresse in einer Seitenansicht;
- Fig. 2: in (a) eine Schnittansicht der Ballenpresse der Fig. 1, die eine Bindung mit zwei Bindeeinheiten oberhalb einer Deichsel der Ballenpresse zeigt, wobei die Bindeeinheiten beide in einer Betriebsposition angeordnet sind, und in (b) eine perspektivische Ansicht einer Bindeeinheit; und
- Fig. 3: in (a) die Schnittansicht aus Fig. 2 (a) ohne die in die Bindeeinheiten jeweils eingelegte Bindemittelrolle, und in (b) und (c) die Schnittansicht aus Fig. 2 (a), wobei jeweils eine der beiden Bindeeinheiten in Wartungsposition angeordnet ist;
- Fig. 4: schematisch die Ballenpresse aus Fig. 1 beim Einlegen einer Bindemittelrolle, und zwar in (b) von oben und in (a) eine Stirnseite der Ballenpresse.

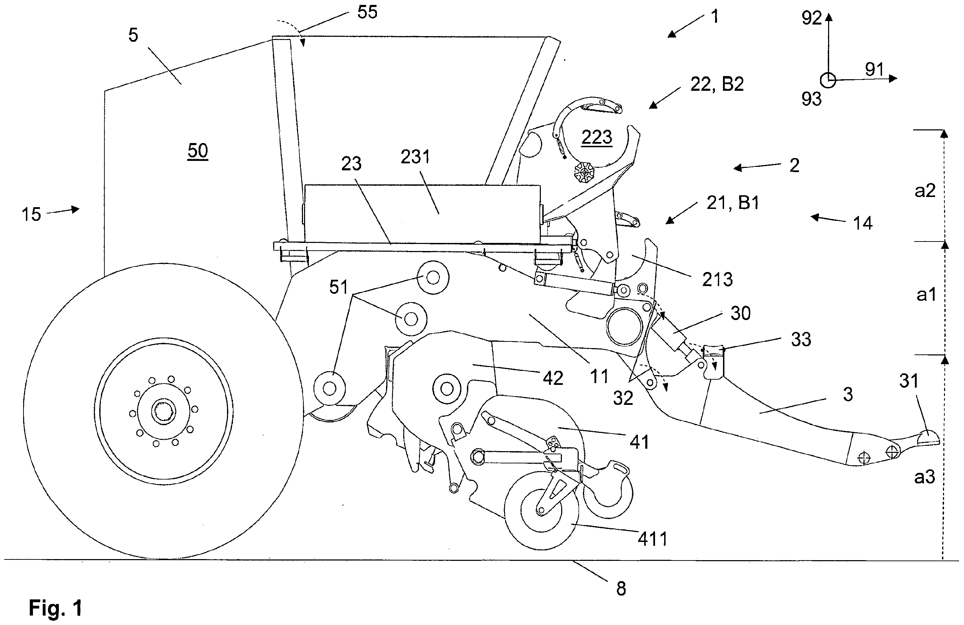

Fig. 1 zeigt schematisch eine erfindungsgemäße Ballenpresse 1 in einer Seitenansicht. Bei dieser Ballenpresse 1 handelt es sich um eine Rundballenpresse, die eine Presskammer 5 aufweist, in der Erntegut (nicht dargestellt) mittels Pressorganen 51 zu einem im Wesentlichen zylindrisch geformten Ballen (nicht dargestellt) gepresst wird. Als Pressorgane 51 sind hier beispielhaft einige Presswalzen gezeigt. Die Begriffe Ballenpresse 1 und Rundballenpresse werden im Rahmen der Figurenbeschreibung daher synonym verwendet. Dabei erstreckt sich die Erfindung sowohl auf Riemenpressen als auch auf Walzenpressen.

Die Ballenpresse 1 weist einen Aufnahmerotor 41, hier eine Pick- up, auf, mit der Erntegut wie beispielsweise Heu oder Stroh vom Boden 8 aufgenommen wird. Die Begriffe Aufnahmerotor 41 und Pick- up werden im Rahmen der Figurenbeschreibung daher synonym verwendet. Fig. 1 zeigt die Pick- up 41 in einer vom Boden 8 abgehobenen Transportposition (nicht bezeichnet). Im Betriebszustand (nicht bezeichnet) der Ballenpresse 1 ist die Pick- up 41 in eine Arbeitsposition (nicht gezeigt) abgesenkt, so dass ein Tastrad 411 der Pick- up 41 über den Boden 8 rollt und Bodenunebenheiten erfasst.

Das im Betriebszustand vom Boden 8 mit der Pick- up 41 aufgenommene Erntegut wird einem Einzugsrotor 42 zugeführt, der es in die Presskammer 5 fördert.

Die Ballenpresse 1 weist einen Rahmen 11 auf, an dem eine Deichsel 3 angeordnet ist, mit der sie an ein Zugfahrzeug (nicht dargestellt) anhängbar ist. Die Deichsel 3 ist an einer Stirnseite 14 der Ballenpresse 1 in Fahrtrichtung 91 vorn angeordnet. Sie ist mittels eines Deichselzylinders 30 höhenverstellbar am Rahmen 11 befestigt. Die Höhenverstellbarkeit ist in Fig. 1 durch Pfeile 32 um Deichselachsen (nicht bezeichnet) angedeutet. Sie weist eine Gegenkupplung 31 zum Befestigen an eine Kupplung (nicht gezeigt) des Zugfahrzeugs auf.

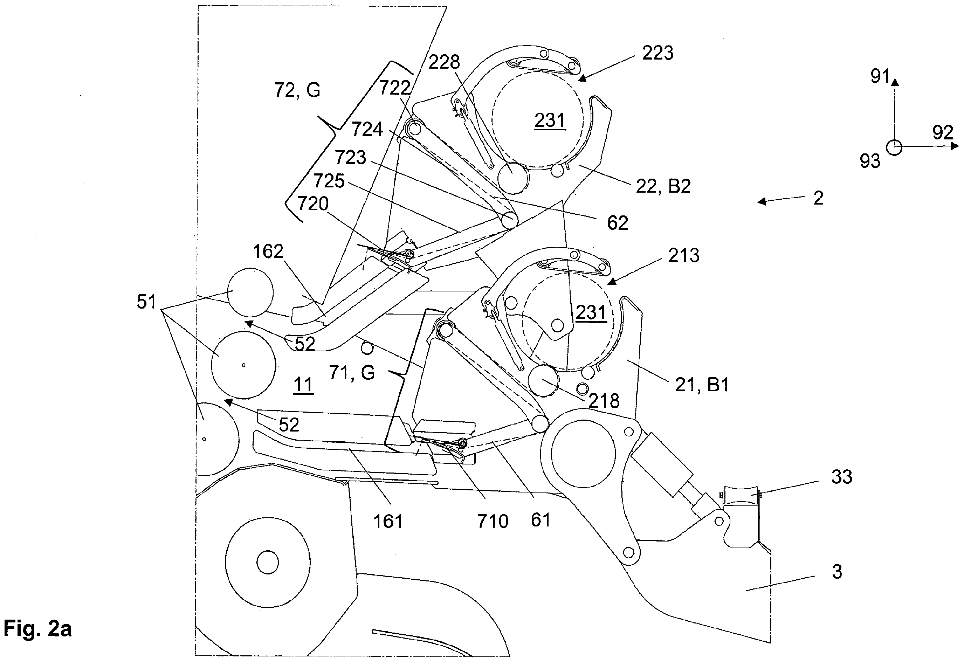

Oberhalb der Deichsel 3 ist eine Bindung 2 mit zwei Bindeeinheiten 21, 22 zur Aufnahme von Bindemittelrollen 231 angeordnet. Dafür weisen die Bindeeinheiten 21, 22 jeweils einen Aufnahmeraum 213, 223 zur Aufnahme jeweils einer Bindemittelrolle 231 auf. Das entrollte Bindemittel 61, 62 (s. Fig. 2a) ist zum Binden des gepressten Ballens vorgesehen.

Die hier dargestellte Ballenpresse 1 weist zwei Bindeeinheiten 21, 22 auf. Die Erfindung umfasst aber auch Ballenpressen 1 mit nur einer Bindeeinheit 21, 22 oder mehr als zwei Bindeeinheiten 21, 22.

Die Bindeeinheiten 21, 22 sind räumlich zueinander versetzt angeordnet. Im Rahmen der Erfindung sind eine vertikale Richtung 92, eine Fahrtrichtung 91 sowie eine Einschubrichtung 93 als Raumrichtung bezeichnet. Die vertikale Richtung 92, die Fahrtrichtung 91 sowie die Einschubrichtung 93 sind jeweils quer zueinander angeordnet.

Die Bindeeinheiten 21, 22 weisen hier einen großen Versatz in vertikaler Richtung 92 auf. Sie sind zudem auch geringfügig in Fahrtrichtung 91 zueinander versetzt angeordnet. Eine erste der beiden Bindeeinheiten 21 weist dabei einen geringeren ersten Abstand a1 zur Deichsel 3 auf, als eine zweite der beiden Bindeeinheiten 22. Dadurch ist ein Abstand a3 der Deichsel 3 vom Boden 8 geringer, als der erste Abstand a1 der ersten Bindeeinheit 21 vom Boden 8 und dieser geringer als ein zweiter Abstand a2 der zweiten Bindeeinheit 22 vom Boden 8.

An einer Rückseite 15 der Ballenpresse 1, das heißt in Fahrtrichtung 91 hinten, ist die Presskammer 5 angeordnet. Zum Auswerfen des fertigen Ballens ist eine Klappe 50 der Presskammer 5 klappbar vorgesehen. Auch die Klappbarkeit der Klappe 50 ist durch einen Pfeil 55 um eine Klappachse (nicht bezeichnet) angedeutet.

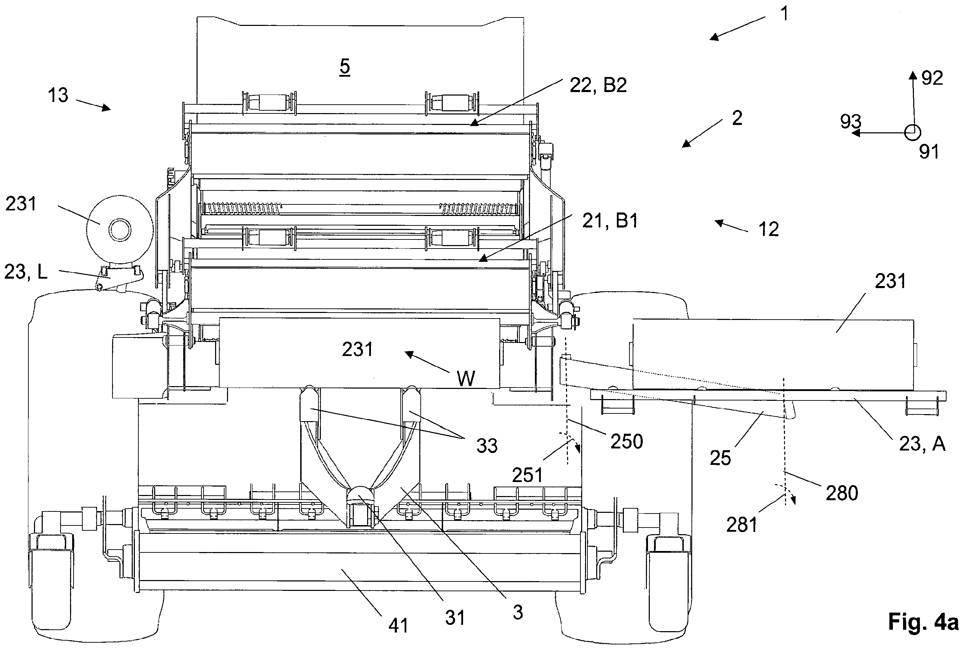

An einer Seite 13 (s. Fig. 4a) der Ballenpresse 1 ist ein Rollenträger 23 vorgesehen, der zum Bevorraten einer Bindemittelrolle 231 vorgesehen ist. Der Rollenträger 23 ist Bestandteil der Bindung 2 der Ballenpresse 1. Er ist hier in einer Lagerposition L (s. Fig. 4a) positioniert, von der aus er in eine Austauschposition A (s. Fig. 4a) verstellbar ist, in der die Bindemittelrolle 231 in den Aufnahmeraum 213, 223 eines der Rollenträger 21, 22 einschiebbar ist.

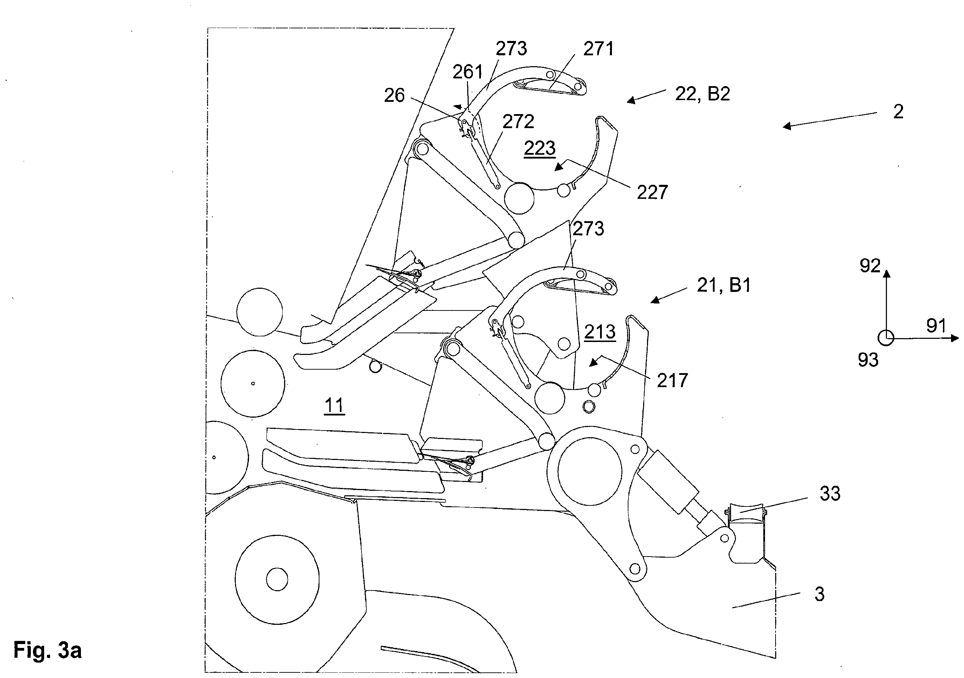

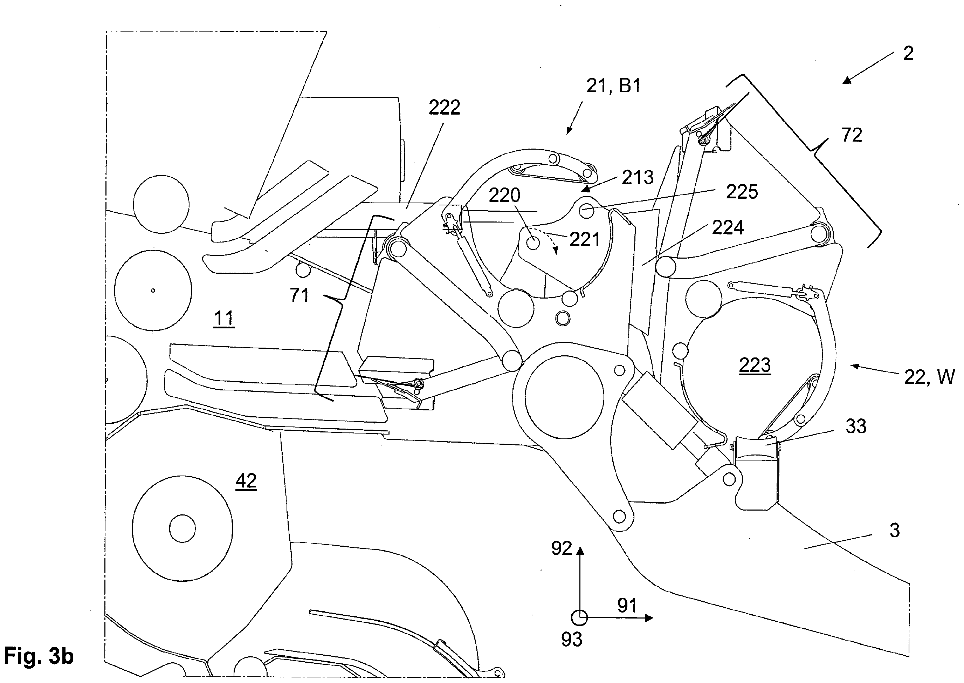

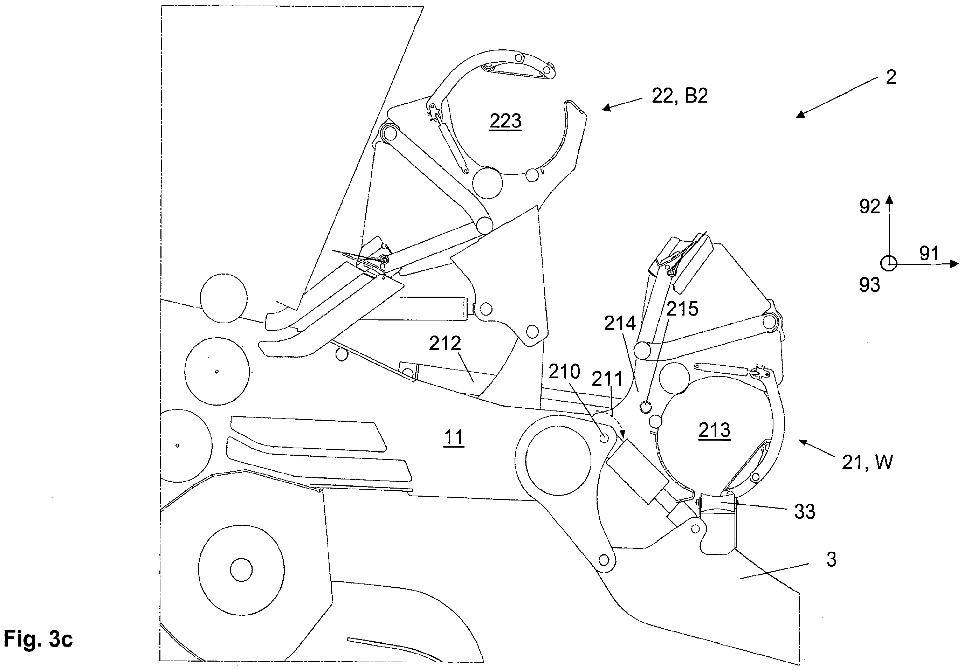

Die Fig. 2 (a) und 3 (a) zeigen einen vergrößerten Ausschnitt aus der Ballenpresse 1 der Fig. 1, der die Bindung 2 mit den zwei Bindeeinheiten 21, 22 oberhalb der Deichsel 3 der Ballenpresse 1 zeigt. Die Bindeeinheiten 21, 22 sind in Fig. 2 (a) und 3 (a) beide in einer Betriebsposition B1, B2 angeordnet, in der sie im Betriebszustand der Ballenpresse 1 positioniert sind. Die Fig. 3 (b) und (c) zeigen hingegen jeweils eine der Bindeeinheiten 21, 22 in einer Wartungsposition W, welche zum Einlegen einer Bindemittelrolle 231 in die Bindeeinheit 21, 22 vorgesehen ist.

Die Bindeeinheiten 21, 22 weisen zwar einen räumlichen Versatz zueinander auf. Sie weisen aber die Bindemittelrolle 231 sowie das entrollte Bindemittel 61, 62 betreffend dieselben Funktionselemente auf und können daher autark genutzt werden.

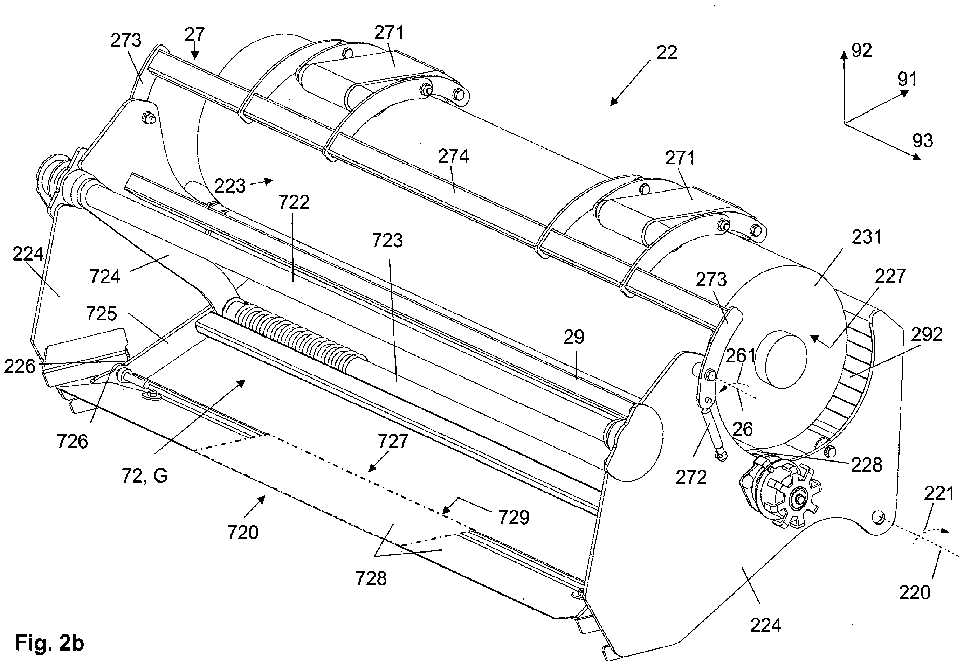

Im Folgenden werden die Bindeeinheiten 21, 22 zunächst anhand der zweiten Bindeeinheit 22 mit Bezug auf die Fig. 2 (b) beschrieben. In Fig. 2 (b) ist die in den Aufnahmeraum 223 eingelegte Bindemittelrolle 231 schematisch durch eine gestrichelte Linie dargestellt.

Die Bindeeinheit 22 weist den Aufnahmeraum 223 auf, der sich in die Einschubrichtung 93 quer zur Fahrtrichtung 91 und quer zur vertikalen Richtung 92 erstreckt. Sie weist zudem Seitenwände 224 auf. Die Seitenwände 224 erstrecken sich in einer durch die vertikale Richtung 92 und die Fahrtrichtung 91 aufgespannten Ebene (nicht bezeichnet). Die Seitenwände 224 weisen jeweils eine Aussparung 227 auf, deren Kontur (nicht bezeichnet) sich entlang des Aufnahmeraums 223 erstreckt. Durch die Aussparung 227 in den Seitenwänden 224 ist der Aufnahmeraum 223 jeweils von außen zugänglich. Die Seitenwände 224 sind durch Verbindungsstreben 29 miteinander verbunden.

Zwischen den Seitenwänden 224 erstreckt sich entlang der Kontur der Aussparung 227 eine Aufnahmewanne 292 für die Bindemittelrolle 231. Zudem erstreckt sich zwischen den Seitenwänden 224 eine erste Umlenkrolle 228, die zum ersten Umlenken des von der Bindemittelrolle 231 abgerollten Bindemittels 62 vorgesehen ist. Die erste Umlenkrolle 228 ist ein Bestandteil der Bindeeinheit 22 und gemeinsam mit der Bindeeinheit 22 von der Betriebsposition B2 in die Wartungsposition W verschwenkbar. Sie ist zwischen den Seitenwänden 224 ortsfest befestigt. Sie weist hier eine haftende Oberfläche (nicht gezeigt) auf. Dafür ist sie zumindest teilweise aus einem elastischen Material gefertigt. Die erste Umlenkrolle 228 wird zum Abbremsen des Bindemittels 62 genutzt.

Oberhalb der Aussparung 227 ist ein Sicherungsbügel 27 vorgesehen. Der Sicherungsbügel 27 umfasst Haltearme 273, die an den Seitenwänden 224 befestigt sind. Die Haltearme 273 sind durch eine Haltestrebe 274 miteinander verbunden. Vorzugsweise sind die Haltearme 273 in eine Schwenkrichtung 261 und zurück schwenkbar an den Seitenwänden 224 befestigt. Dadurch ist der Sicherungsbügel 27 um eine Halteachse 26 gegen eine Rückstellkraft, beispielsweise einer Feder 272, in und gegen die Schwenkrichtung 261 schwenkbar. Die Haltestrebe 274 ist im Betriebszustand B2 seitlich oder oberhalb der Bindemittelrolle 231 angeordnet. Anstelle einer Feder 272 kann auch eine automatische Betätigung des Sicherungsbügels 27, beispielsweise mittels eines hydraulischen Zylinders, vorgesehen sein.

An der Haltestrebe 274 sind Halteelemente 271 angeordnet, die die Bindemittelrolle 231 in den Aufnahmeraum 223 drücken. Die Halteelemente 271 sind so positioniert, dass die in den Aufnahmeraum 224 eingelegte Bindemittelrolle 231 auch in der Wartungsposition W nicht aus dem Aufnahmeraum 223 heraus fallen kann.

An den Halteelementen 271 sind Riemen (nicht bezeichnet) vorgesehen, mit denen die Bindemittelrolle 231 in der Wartungsposition W gegen die erste Umlenkrolle 218, 228 gedrückt wird. Beim Abrollen der Bindemittelrolle 231 können sich die Riemen der Halteelemente 271 sowie die erste Umlenkrolle 218, 228 drehen und so das Abrollen des Bindemittels 61, 62 von der Bindemittelrolle 231 erleichtern. Anstelle der Riemen können alternativ auch Rollen vorgesehen sein.

Durch Verschwenken der Haltestrebe 274 ist der Aufnahmeraum 223 nicht nur durch die seitlichen Aussparungen sondern auch von vorn, das heißt von der Stirnseite 14 aus, zugänglich. Die Bindemittelrolle 231 ist daher auch von der Stirnseite 14 aus in den Aufnahmeraum 223 einlegbar oder diesem entnehmbar.

Die Bindeeinheit 22 weist zudem eine Zuführeinheit 72 auf. Die Zuführeinheit 72 ist in Fahrtrichtung 91 hinter dem Aufnahmeraum 223 angeordnet. Sie ist dafür vorgesehen, dass Bindemittel 61, 62 zum Pressraum zu führen.

Die Bindeeinheit 22 ist zudem in vertikaler Richtung oben offen ausgebildet, und daher auch von oben aus für den Bediener zugänglich. Dadurch hat der Bediener Zugriff auf die Zuführeinheit 72.

Die Zuführeinheit 72 umfasst eine zweite Umlenkrolle 722 und eine dritte Umlenkrolle 723 zum Umlenken des Bindemittels 231 sowie einen Zuführschnabel 720. Der Zuführschnabel 720 ist zum Einführen des Bindemittels 62 in die Presskammer 5 vorgesehen. Die Umlenkrollen 722, 723 sowie der Zuführschnabel 720 der Zuführeinheit 72 sind an zwei voneinander beabstandeten Koppelgestängen (nicht bezeichnet) befestigt, zwischen denen sie sich erstrecken. Die beiden Koppelgestänge umfassen jeweils ein erstes Gestänge 724 und ein sich in einem Winkel dazu erstreckendes zweites Gestänge 725.

Zwischen einem ersten Ende (nicht bezeichnet) der ersten Gestänge 724 erstreckt sich die zweite Umlenkrolle 722. Die ersten Enden der ersten Gestänge 724 sind zudem jeweils drehbar an der ihnen benachbarten Seitenwand 224 befestigt. Ein zweites Ende (nicht bezeichnet) der ersten Gestänge 724 ist drehbar an einem ersten Ende (nicht bezeichnet) der zweiten Gestänge 725 befestigt. Zwischen den ersten Enden der zweiten Gestänge 725 erstreckt sich zudem die dritte Umlenkrolle 723. Der Zuführschnabel 720 erstreckt sich zwischen den zweiten Enden (nicht bezeichnet) der zweiten Gestänge 725.

Aufgrund der drehbaren Befestigung der ersten Enden der ersten Gestänge 724 jeweils an der ihnen benachbarten Seitenwand 224, sowie der drehbaren Befestigung der zweiten Gestänge 725 an den ersten Gestängen 724 ist der Zuführschnabel 720 von einer Grundposition G aus entlang einer Führungskulisse 162 (s. Fig. 3a) in eine Arbeitsposition (nicht gezeigt) verstellbar.

Dafür kann als Verstellmittel (nicht gezeigt) ein Hebel vorgesehen sein, mit das erste Gestänge 724 um die zweite Umlenkrolle 722 gedreht wird, so dass sich die Gestänge 724, 725 entfalten und der Zuführschnabel 720 entlang der Führungskulisse 162 geführt wird. Das Verstellen des Verstellmittels kann fremdkraftbetätigt erfolgen, beispielsweise mittels eines hydraulischen oder elektrohydraulischen Zylinders (nicht gezeigt).

Fig. 3 (b) zeigt die Grundposition G der Zuführeinheit 72, in die die Zuführeinheit 72 verfahren ist, wenn die Bindeeinheit 22 von der Betriebsposition B2 in die Wartungsposition W verschwenkt wird. In der Grundposition G ist die Zuführeinheit 72 innerhalb der Bindeeinheit 22 angeordnet, so dass sich der Bediener zum Einfädeln des Bindemittels 231 nicht in die Ballenpresse 1 beugen muss. In der Grundposition G ist ein Gegenanschlag 726 des Zuführschnabels 720 an einem Anschlag 226 der Bindeeinheit 22 angeordnet. Dadurch sind die Umlenkrollen 722 - 723 sowie der Zuführschnabel 720 der Zuführeinheit 72 für den Bediener in einer definierten Position angeordnet und leicht zugänglich. Bei automatisch verstellbarer Zuführeinheit 72 kann eine solche definierte Position auch mittels einer Steuerungseinheit (nicht gezeigt) automatisch anfahrbar sein.

Der Zuführschnabel 720 umfasst zwei einander gegenüber liegend angeordnete Leitbleche 728, zwischen denen ein sich in eine Einführrichtung 727 hin verjüngender Zuführspalt 729 vorgesehen ist. Eines der beiden Leitbleche 728 ist hier lediglich durch gestrichelte Linien schematisch gezeigt. Die Leitbleche 728 sind jeweils an Querstreben befestigt, die sich zwischen den zweiten Enden der zweiten Gestänge 725 erstrecken.

Das Bindemittel 62 wird eingefädelt, indem es zunächst um die erste Umlenkrolle 228 gelegt wird. Dann wird es der Zuführeinheit 72 zugeführt, wobei es erst um die zweite Umlenkrolle 722 und danach um die dritte Umlenkrolle 723 gelegt wird. Anschließend wird es in Einführrichtung 727 in den Zuführspalt 729 zwischen die Leitbleche 728 eingefädelt.

Das Einfädeln des Bindemittels 62 zwischen die Leitbleche 728 des Zuführschnabels 720 erfolgt in der Wartungsposition W der Bindeeinheit 22. In der Betriebsposition B2 kann die Zuführeinheit 72 hingegen verfahren werden, um das Bindemittel 231 in die Ballenpresse 1 und zur Presskammer 5 zu führen.

Fig. 2 (a) zeigt die beiden Bindeeinheiten 21, 22 der Ballenpresse 1 mit jeweils in den Aufnahmeraum 213, 223 der Bindeeinheiten 21, 22 eingelegten Bindemittelrollen 231. Die entrollten Bindemittel 61, 62 sind jeweils um die erste Umlenkrolle 218, 228, dann um die zweite Umlenkrolle 712, 722, dann um die dritte Umlenkrolle 713, 723 geführt und anschließend in den Zuführschnabel 710, 720 eingefädelt. Dies ist mit gestrichelten Linien schematisch gezeigt. Fig. 2 (a) zeigt die Grundposition G der Zuführeinheit.

Zudem ist für jeden der beiden Zuführschnabel 710, 720 jeweils eine Führungskulisse 161, 162 schematisch gezeigt, entlang der der Zuführschnabel 710, 720 von der Grundposition G aus jeweils zur Presskammer 5 in die Arbeitsposition verfahrbar ist, um das jeweilige Bindemittel 61, 62 in die Presskammer 5 einzuführen. In der Arbeitsposition können die Bindemittel 61, 62 jeweils durch einen Spalt 52 zwischen den Pressorganen 51 in die Presskammer 5 eingezogen werden. Dabei wird das jeweils eingezogene Bindemittel 61, 62 vom rotierenden Ballen erfasst. Vorzugsweise erfolgt das Verfahren der Zuführeinheit 71, 72 in die Arbeitsposition automatisch, beispielsweise nach Erreichen des gewünschten oder maximalen Ballendurchmessers.

Fig. 3 zeigt in (a) den Ausschnitt aus Fig. 2 (a) ohne die jeweils in den Aufnahmeraum 213, 223 der Bindeeinheit 21, 22 eingelegte Bindemittelrolle 231.

Die Bindeeinheiten 21, 22 sind in Bezug auf ihren Aufnahmeraum 213, 223 sowie ihre Zuführeinheit 71, 72 baugleich ausgebildet. Aufgrund ihrer versetzten Position relativ zur Deichsel 3 unterscheiden sie sich aber in der Form ihrer Seitenwände 224.

Die Seitenwände 224 weisen als Schwenkmittel jeweils eine Aufnahme für einen Achsstummel 210, 220 (s. Fig. 3 (b), (c)) auf, der als Schwenkachse dient. Diese Schwenkachse ist im Rahmen der Erfindung auch als der Bindeeinheit 21, 22 zugeordnet bezeichnet. Um diesen Achsstummel 210, 220 ist jede der Bindeeinheiten 21, 22 jeweils von seiner Betriebsposition B1, B2 in die Wartungsposition W verschwenkbar. Dafür sind die Achsstummel 210, 220 jeweils drehbar am Rahmen 11 der Ballenpresse 1 befestigt.

Zumindest jeweils eine der Seitenwände 224 jeder Bindeeinheit 21, 22 weist zudem als Schwenkmittel eine Aufnahme für einen Achsstummel 215, 225 (s. Fig. 3 (b), (c)) auf, der zum Anlenken eines Aktuators 212, 222 dient. Mit dem Aktuator 212, 222 ist die jeweilige Bindeeinheit 21, 22 automatisch von seiner Betriebsposition B1, B2 in die Wartungsposition W verschwenkbar. Als Aktuator 212, 222 ist hier ein elektrohydraulisch angetriebener Kolbenzylinder gezeigt.

Die Bindeeinheiten 21, 22 sind in vertikaler Richtung 92 oberhalb der Deichsel 3 angeordnet und weisen verschiedene Abstände a1, a2 zur Deichsel 3 auf. Sie sind durch Verschwenken um ihre Schwenkachse 210, 220 jeweils auf die Deichsel 3 absenkbar.

Die Deichsel 3 ist zudem höhenverstellbar vorgesehen. Um die Wartungsposition W dennoch exakt anfahren zu können, so dass eine in den Aufnahmeraum 213, 223 aufgenommene Bindemittelrolle 231 in der Wartungsposition W auf die Deichsel 3 abgelegt ist, weisen die Bindeeinheiten 21, 22 jeweils Sensoren (nicht gezeigt) auf, die ihre Position, insbesondere relativ zur Deichsel 3, erfassen. Die Höhenverstellung ermöglicht eine Anpassung der Wartungsposition W an die Größe eines Bedieners.

In Fig. 3 (b) ist die zweite Bindeeinheit 22 von seiner Betriebsposition B2 in die Wartungsposition W abgesenkt. Die erste Bindeeinheit 21 befindet sich dabei in seiner Betriebsposition B1.

In Fig. 3 (c) ist die erste Bindeeinheit 21 von seiner Betriebsposition B1 in die Wartungsposition W abgesenkt. Die zweite Bindeeinheit 22 befindet sich dabei in seiner Betriebsposition B2.

Die Wartungsposition W ist sowohl für die erste Bindeeinheit 21 als auch für die zweite Bindeeinheit 22 dieselbe. Dabei ist die Zuführeinheit 71, 72, insbesondere der Zuführschnabel 710, 720, in der Wartungsposition W in vertikaler Richtung 92 oben angeordnet und dadurch besonders leicht zugänglich.

Um das Entrollen des Bindemittels 61, 62 in der Wartungsposition W weiter zu vereinfachen, können an der Aufnahmewanne 292 und/oder dem Haltearm 273 Rollmittel (s. Fig. 2 b)) vorgesehen sein.

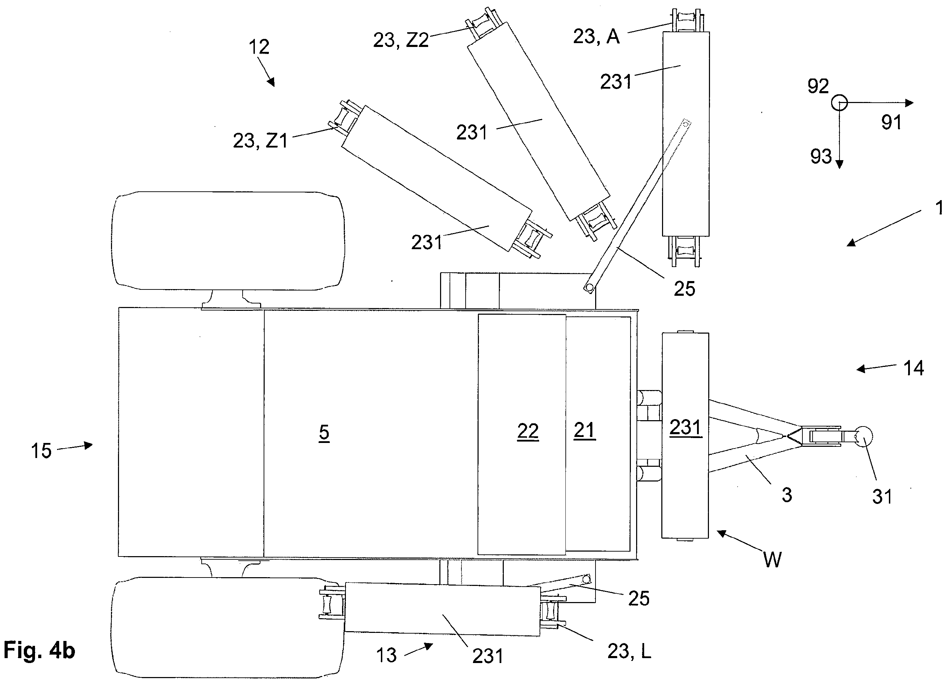

Fig. 4 zeigt schematisch die Ballenpresse 1 aus Fig. 1 beim Einlegen einer Bindemittelrolle 231, und zwar in (a) eine Stirnseite 14 der Ballenpresse 1 und in (b) die Ballenpresse von oben. Zur Verdeutlichung sind die Bindeeinheiten 21, 22 in Fig. 4 (a) schematisch ihrer Betriebsposition B1 B2 dargestellt. Lediglich eine Bindemittelrolle 231 ist dort in der Wartungsposition W und auf zwei an der Deichsel 3 angeordnete Auflagen 33 abgelegt gezeigt.

An jeder Seite 12, 13 der Ballenpresse 1 ist jeweils ein Rollenträger 23 angeordnet. An beiden Rollenträgern 23 ist jeweils eine Bindemittelrolle 231 angeordnet.

Einer der Rollenträger 23 ist in der Lagerposition L angeordnet, in der er sich etwa parallel der Fahrtrichtung 91 erstreckt. Der andere Rollenträger 23 ist zur Verdeutlichung in die Austauschposition A verstellt, hier verschwenkt.

Zum Verschwenken weisen die Rollenträger 23 jeweils einen Schwenkhebel 25 auf, dessen eines Ende (nicht bezeichnet) um eine Schwenkhebelachse 250 in eine Schwenkrichtung 251 und zurück drehbar am Rahmen 11 befestigt gelagert ist, und dessen anderes Ende (nicht bezeichnet) um eine Rollenträgerachse 280 in eine Rollenträgerschwenkrichtung 281 drehbar am Rollenträger 23 gelagert ist.

Der Schwenkhebel 25 ermöglicht ein Verschwenken des Rollenträgers 23 um einen Winkel (nicht gezeigt) von etwa 90°, so dass der Rollenträger 23 in der Austauschposition A etwa fluchtend zur Wartungsposition W angeordnet ist. Die Fig. 4 (b) zeigt den Rollenträger 23 mit der Bindemittelrolle 231 schematisch beim Verschwenken des Schwenkhebels 25 in zwei Zwischenpositionen Z1, Z2.

Zudem ist der Rollenträger 23 in der Austauschposition A auf Höhe der Auflagen 33 der Deichsel 3 angeordnet. Dadurch kann die auf dem Rollenträger 23 bevorratete Bindemittelrolle 231 durch Verschieben in Einschubrichtung 92 vom Rollenträger 23 aus direkt auf die Auflagen 33 aufgeschoben werden.

Bei in der Wartungsposition W befindlicher Bindeeinheit 21, 22 wird die Bindemittelrolle 231 so direkt in den Aufnahmeraum 213, 223 eingeschoben.

Das Verschwenken des Rollenträgers 23 erfolgt bevorzugt manuell. Prinzipiell kann aber auch das Verschwenken des Rollenträgers 23 automatisiert sein.

Zum Bedienen der Bindung 2, insbesondere der Bindeeinheiten 21, 22, sind zumindest an der Ballenpresse 1, vorzugsweise an ihrer Stirnseite 14, insbesondere in der Nähe der Deichsel 3, Betätigungsmittel (nicht gezeigt), insbesondere Schalter oder Hebel, vorgesehen.

Die Ballenpresse 1 ist an ein Zugfahrzeug (nicht gezeigt) anhängbar, so dass sie gemeinsam mit diesem einen Arbeitszug (nicht gezeigt) bildet. Bei dem Arbeitszug ist es bevorzugt, dass auch im Zugfahrzeug Betätigungsmittel (nicht gezeigt) zum Bedienen der Bindung 2 angeordnet sind.

Die Betätigungsmittel ermöglichen dem Bediener zumindest ein Verstellen der Bindeeinheiten 21, 22 jeweils von ihrer Betriebsposition B1, B2 in die Wartungsposition W und/oder zurück. Es kann zudem jeweils eine Möglichkeit zum Verstellen ihrer Zuführeinheit 71, 72 von der Grundposition G in die Arbeitsposition und/oder zurück für den Bediener vorgesehen sein. Weiterhin kann eine Möglichkeit zum Verstellen der Rollenträger 23 von der Lagerposition L in die Austauschposition A und/oder zurück für den Bediener vorgesehen sein.

Zumindest im Zugfahrzeug sind weitere Betätigungsmittel vorgesehen, die die Auswahl der beim Binden aktiven Bindeeinheit ermöglichen. Dabei kann auch vorgesehen sein, dass beide Bindeeinheiten gleichzeitig genutzt werden, beispielsweise um einen Ballen gleichzeitig mit Netz und Folie zu umwickeln.

## Patentansprüche

1. Landwirtschaftliche Ballenpresse (1), insbesondere Rundballenpresse, mit einer Presskammer (5) zum Pressen von Erntegut in einen Ballen, mit einer Bindung (2) mit mindestens einer Bindeeinheit (21, 22), die einen Aufnahmeraum (213, 223) zur Aufnahme einer Bindemittelrolle (231) aufweist, dessen entrolltes Bindemittel (61, 62) zum Binden des gepressten Ballens vorgesehen ist, wobei die Bindeeinheit (21, 22) von einer in einem Betriebszustand der Ballenpresse vorgesehenen Betriebsposition (B1, B2) in eine in einem Wartungszustand vorgesehene Wartungsposition (W) verschwenkbar ist,
**dadurch gekennzeichnet, dass**
die Ballenpresse (1) zwei Bindeeinheiten (21, 22) aufweist, die in ihrer Betriebsposition (B1, B2) in mindestens eine Raumrichtung (91, 92, 93) zueinander versetzt angeordnet sind, wobei die Bindeeinheiten (21, 22) in dieselbe Wartungsposition (W) verstellbar sind.

2. Landwirtschaftliche Ballenpresse (1) nach Anspruch 1,
**dadurch gekennzeichnet, dass** die Bindeeinheit (21, 22) zumindest eine erste Umlenkrolle (218, 228) und/oder eine Zuführeinheit (71, 72) umfasst, die gemeinsam mit ihr von der Betriebsposition (B1, B2) in die Wartungsposition (W) verschwenkbar ist.

3. Landwirtschaftliche Ballenpresse (1) nach einem der vorherigen Ansprüche,
**dadurch gekennzeichnet, dass** sie eine Deichsel (3) zum Anhängen an ein Zugfahrzeug aufweist, und dass die Bindeeinheit (21, 22) in der Wartungsposition (W) so an der Deichsel (3) angeordnet ist, dass die Deichsel (3) an den Aufnahmeraum (213, 223) angrenzt.

4. Landwirtschaftliche Ballenpresse (1) nach einem der vorherigen Ansprüche, **dadurch gekennzeichnet, dass** die Zuführeinheit (71, 72) einen Zuführschnabel (710, 720) umfasst, in den das entrollte Bindemittel (61, 62) einfädelbar ist, und welcher zum Einführen des Bindemittels (61, 62) in die Presskammer (5) vorgesehen ist.

5. Landwirtschaftliche Ballenpresse (1) nach Anspruch 4, **dadurch gekennzeichnet, dass** sie zum Einführen des Bindemittels (61, 62) in die Presskammer (5) ein automatisch angetriebenes Verstellmittel zum Verstellen des Zuführschnabels (710, 720), sowie eine Führungskulisse (161, 162) umfasst, wobei der Zuführschnabel (710, 720) durch Antreiben des Verstellmittels entlang der Führungskulisse (161, 162) verstellt wird.

6. Landwirtschaftliche Ballenpresse (1) nach einem der vorherigen Ansprüche, **dadurch gekennzeichnet, dass** die Zuführeinheit (71, 72) mindestens eine Umlenkrolle (722, 723) zum Umlenken des Bindemittels (61, 62) umfasst.

7. Landwirtschaftliche Ballenpresse (1) nach einem der vorherigen Ansprüche, **dadurch gekennzeichnet, dass** ein Abstand der Bindeeinheit (21, 22) oder der Bindeeinheiten (21, 22) vom Boden (8) in der Wartungsposition (W) geringer als in der Betriebsposition (B1, B2) ist.

8. Landwirtschaftliche Ballenpresse (1) nach einem der vorherigen Ansprüche, **dadurch gekennzeichnet, dass** jede der Bindeeinheiten (21, 22), manuell oder automatisch, durch Verschwenken um eine ihr zugeordnete Schwenkachse (210, 220) von ihrer Betriebsposition (B1, B2) aus in die Wartungsposition (W) verschwenkbar, insbesondere auf die Deichsel (3) absenkbar, ist.

9. Landwirtschaftliche Ballenpresse (1) nach einem der vorherigen Ansprüche, **dadurch gekennzeichnet, dass** die Bindung (2) einen Rollenträger (23) umfasst, der zur Aufnahme einer (Ersatz-) Bindemittelrolle (231) dient.

10. Landwirtschaftliche Ballenpresse (1) nach einem der vorherigen Ansprüche, **dadurch gekennzeichnet, dass** der Rollenträger (23) von einer im Betriebszustand vorgesehenen Lagerposition (L) in eine im Wartungszustand vorgesehene Austauschposition (A) verstellbar ist, in der eine am Rollenträger (23) angeordnete Bindemittelrolle (231) in die Rollenaufnahme (213, 223) der in der Wartungsposition (W) angeordneten Bindeeinheit (21, 22) einschiebbar ist.

11. Landwirtschaftliche Ballenpresse (1) nach einem der vorherigen Ansprüche, **dadurch gekennzeichnet, dass** die Bindung (2) zwei Rollenträger (23) umfasst, die in ihrer Lagerposition (L) an gegenüberliegenden Seiten (12, 13) der Ballenpresse (1) angeordnet sind, insbesondere in Fahrtrichtung.

12. Landwirtschaftlicher Arbeitszug mit einer Ballenpresse (1) nach einem der vorherigen Ansprüche und einer Zugmaschine, wobei die Ballenpresse (1) an die Zugmaschine angehängt ist, **dadurch gekennzeichnet, dass** die Ballenpresse (1) und/oder die Zugmaschine Betätigungsmittel zum Verstellen der Bindeeinheit (21, 22) oder der Bindeeinheiten (21, 22) von der Betriebsposition (B1, B2) in die Wartungsposition (W) aufweist.

13. Verfahren zum Einsetzen einer Bindemittelrolle (231) in einen Aufnahmeraum (213, 223) einer Bindeeinheit (21, 22) einer Ballenpresse (1) nach einem der Ansprüche 1 - 11, mit den Schritten:
a) Verschwenken der Bindeeinheit (21, 22) von der Betriebsposition (B1, B2) in die Wartungsposition (W), so dass die Deichsel (3) am oder im Aufnahmeraum (213, 223) der Bindeeinheit (21, 22) angeordnet ist,
b) Einschieben der Bindemittelrolle (231) in Einschubrichtung (93) in den Aufnahmeraum (213, 223), wobei die Bindemittelrolle (231) auf die Deichsel (3) abgelegt wird, und
c) Zurückschwenken, der Bindeeinheit (21, 22) von der Wartungsposition (W) in die Betriebsposition (B1, B2).

14. Verfahren nach Anspruch 13, **dadurch gekennzeichnet, dass** es zwischen den Schritten a) und b) den Schritt:
d) Entnehmen einer noch in der Bindeeinheit (21, 22) angeordneten, alten Bindemittelrolle (231) durch Verschieben dieser in oder gegen die Einschubrichtung (93) umfasst.

15. Verfahren nach einem der Ansprüche 13 - 14, **dadurch gekennzeichnet, dass** es zwischen den Schritten b) und c) den Schritt:
e) Einfädeln des Bindemittels (231) in eine Zuführeinheit (71, 72) umfasst.

## Claims

1. Agricultural baler (1), in particular a round baler, comprising a pressing chamber (5) for pressing crops into a bale and a binding system (2) having at least one binding unit (21, 22) which has a receiving space (213, 223) for receiving a binding means roll (231), the unrolled binding means (61, 62) of which is provided for binding the pressed bale, the binding unit (21, 22) being pivotable from an operating position (B1, B2) provided in an operating state of the baler into a maintenance position (W) provided in a maintenance state,
**characterised in that**
the baler (1) has two binding units (21, 22) which, in their operating position (B1, B2), are offset from one another in at least one spatial direction (91, 92, 93), the binding units (21, 22) being movable into the same maintenance position (W).

2. Agricultural baler (1) according to claim 1, **characterised in that** the binding unit (21, 22) comprises at least one first deflection roller (218, 228) and/or a feed unit (71, 72) which, together with said binding unit, can be pivoted from the operating position (B1, B2) into the maintenance position (W).

3. Agricultural baler (1) according to either of the preceding claims, **characterised in that** said baler has a drawbar (3) for hitching to a towing vehicle, and **in that** the binding unit (21, 22), in the maintenance position (W), is arranged on the drawbar (3) such that the drawbar (3) is adjacent to the receiving space (213, 223).

4. Agricultural baler (1) according to any of the preceding claims, **characterised in that** the feed unit (71, 72) comprises a feed spout (710, 720) into which the unrolled binding means (61, 62) can be threaded and which is provided for introducing the binding means (61, 62) into the pressing chamber (5).

5. Agricultural baler (1) according to claim 4, **characterised in that** said baler, for introducing the binding means (61, 62) into the pressing chamber (5), comprises an automatically driven moving means for moving the feed spout (710, 720) and a guide slot (161, 162), wherein the feed spout (710, 720) is moved by driving the moving means along the guide slot (161, 162).

6. Agricultural baler (1) according to any of the preceding claims, **characterised in that** the feed unit (71, 72) comprises at least one deflection roller (722, 723) for deflecting the binding means (61, 62).

7. Agricultural baler (1) according to any of the preceding claims, **characterised in that** a distance of the binding unit (21, 22) or the binding units (21, 22) from the ground (8) in the maintenance position (W) is less than in the operating position (B1, B2).

8. Agricultural baler (1) according to any of the preceding claims, **characterised in that** each of the binding units (21, 22) can be pivoted, manually or automatically, from the operating position (B1, B2) thereof into the maintenance position (W), in particular lowered onto the drawbar (3), by pivoting about a pivot axis (210, 220) associated with said binding unit.

9. Agricultural baler (1) according to any of the preceding claims, **characterised in that** the binding system (2) comprises a roll carrier (23) which is used to accommodate a (replacement) binding means roll (231).

10. Agricultural baler (1) according to any of the preceding claims, **characterised in that** the roll carrier (23) can be moved from a storage position (L) provided in the operating state into an exchange position (A) provided in the maintenance state, in which a binding means roll (231) arranged on the roll carrier (23) can be inserted into the roll receptacle (213, 223) of the binding unit (21, 22) arranged in the maintenance position (W).

11. Agricultural baler (1) according to any of the preceding claims, **characterised in that** the binding system (2) comprises two roll carriers (23) which are arranged in their storage position (L) on opposite sides (12, 13) of the baler (1), in particular in the direction of travel.

12. Agricultural work train comprising a baler (1) according to any of the preceding claims and a tractor, the baler (1) being hitched to the tractor, **characterised in that** the baler (1) and/or the tractor have actuating means for moving the binding unit (21, 22) or the binding units (21, 22) from the operating position (B1, B2) into the maintenance position (W).

13. Method for inserting a binding means roll (231) into a receiving space (213, 223) of a binding unit (21, 22) of a baler (1) according to any of claims 1-11, comprising the steps of:
a) pivoting the binding unit (21, 22) from the operating position (B1, B2) into the maintenance position (W), so that the drawbar (3) is arranged on or in the receiving space (213, 223) of the binding unit (21, 22),
b) sliding the binding means roll (231) in the insertion direction (93) into the receiving space (213, 223), wherein the binding means roll (231) is placed on the drawbar (3), and
c) pivoting the binding unit (21, 22) from the maintenance position (W) back into the operating position (B1, B2).

14. Method according to claim 13, **characterised in that**, between steps a) and b), the method comprises the step of:
d) removing an old binding means roll (231) still arranged in the binding unit (21, 22) by moving said roll in or counter to the insertion direction (93).

15. Method according to any of claims 13-14, **characterised in that**, between steps b) and c), the method comprises the step of:
e) threading the binding means (231) into a feed unit (71, 72).

## Revendications

1. Presse à balles agricole (1), notamment presse à balles rondes comportant une chambre de presse (5) pour presser le produit récolté sous la forme d'une balle, un mécanisme de nouage (2) avec au moins une unité de nouage (21, 22) comportant une chambre de réception (213, 223) pour recevoir une bobine de ficelle (231) dont la ficelle (61, 62) déroulée sert à nouer les balles pressées,
- l'unité de nouage (21, 22) pouvant être pivotée d'une position de fonctionnement (B1, B2) pour l'état de nouage de la presse à balles dans une position d'entretien (W) prévue pour l'état d'entretien,
presse à balles (1) **caractérisée en ce qu'**elle elle comprend deux unités de nouage (21, 22) installées décalées en position de fonctionnement (B1, B2) dans au moins une direction de l'espace (91, 92, 93), les unités de nouage (21, 22) pouvant être mises dans la même position d'entretien (W).

2. Presse à balles agricole (1) selon la revendication 1,
**caractérisée en ce que**
l'unité de nouage (21, 22) comporte au moins un premier galet de renvoi (218, 228) et/ou une unité d'alimentation (71, 72) qui peuvent pivoter en commun de leur position de fonctionnement (B1, B2) à leur position d'entretien (W).

3. Presse à balles agricole (1) selon l'une des revendications précédentes, **caractérisée en ce qu'**elle comprend
un timon (3) pour s'accrocher à un tracteur, et
l'unité de nouage (21, 22) en position d'entretien (W) est prévue sur le timon (3) pour que le timon (3) soit adjacent à la chambre de réception (213, 223).

4. Presse à balles agricole (1) selon l'une des revendications précédentes, **caractérisée en ce que**
l'unité d'alimentation (71, 72) comporte un bec d'alimentation (710, 720) dans lequel s'enfile la ficelle déroulée (61, 62) et qui est prévu pour introduire la ficelle (61, 62) dans la chambre de presse (5).

5. Presse à balles agricole (1) selon la revendication 4,
**caractérisée en ce que**
pour introduire la ficelle (61, 62) dans la chambre de presse (5), il est prévu un moyen de déplacement entraîné automatiquement pour déplacer le bec d'alimentation (710, 720) et une coulisse de guidage (161, 162), le bec d'alimentation (710, 720) étant déplacé le long de la coulisse de guidage (161, 162) par l'entraînement du moyen de déplacement.

6. Presse à balles agricole (1) selon l'une des revendications précédentes, **caractérisée en ce que**
l'unité d'alimentation (71, 72) comprend au moins un galet de renvoi (722, 723) pour dévier la ficelle (61, 62).

7. Presse à balles agricole (1) selon l'une des revendications précédentes, **caractérisée en ce que**
la distance de l'unité de nouage (21, 22) ou des unités de nouage (21, 22) par rapport au sol (8) en position d'entretien (W) est inférieure à celle en position de fonctionnement (B1, B2).

8. Presse à balles agricole (1) selon l'une des revendications précédentes, **caractérisée en ce que**
chacune des unités de nouage (21, 22) peut être basculée et notamment abaissée sur le timon (3) manuellement ou automatiquement par le basculement autour de l'axe de basculement (210, 220) qui lui est associé à partir de sa position de fonctionnement (B1, B2) dans la position d'entretien (W).

9. Presse à balles agricole (1) selon l'une des revendications précédentes, **caractérisée en ce que**
le mécanisme de nouage (2) comprend un support de bobine (23) pour recevoir une bobine de ficelle (231) de réserve.

10. Presse à balles agricole (1) selon l'une des revendications précédentes,
**caractérisée en ce que**
le support de bobine (23) peut être déplacé d'une position de stockage (L) prévue pour l'état de fonctionnement dans une position d'échange (A) prévue pour l'état d'entretien, dans laquelle une bobine de ficelle (231) prévue sur le support de bobine (23) est mise dans le logement de bobine (213, 223) de l'unité de nouage (21, 22) en position d'entretien (W).

11. Presse à balles agricole (1) selon l'une des revendications précédentes,
**caractérisée en ce que**
le nouage (2) comprend deux supports de bobine (23) prévus en position de stockage (L) sur les côtés opposés (12, 13) de la presse à balles (1) notamment dans la direction de déplacement.

12. Train agricole comprenant une presse à balles (1) selon l'une des revendications précédentes et un tracteur,
la presse à balles (1) étant accrochée au tracteur,
**caractérisé en ce que**
la presse à balles (1) et/ou le tracteur comprennent des moyens d'actionnement pour déplacer l'unité de nouage (21, 22) ou les unités de nouage (21, 22) et les faire passer de leur position de fonctionnement (B1, B2) à leur position d'entretien (W).

13. Procédé de remplacement d'une bobine de ficelle (231) dans le volume récepteur (213, 223) d'une unité de nouage (21, 22) d'une presse à balles (1) selon l'une des revendications 1-11 comprenant les étapes consistant à :
a) basculer l'unité de nouage (21, 22) de sa position de fonctionnement (B1, B2) dans sa position d'entraînement (W) pour que le timon (3) se trouve sur ou dans le logement récepteur (213, 223) de l'unité de nouage (21, 22),
b) engager la bobine de ficelle (231) dans la direction d'entrée (93) dans la chambre de réception (213, 223), la bobine de ficelle (231) étant déposé sur le timon (3), et
c) basculer en retour l'unité de lien (21, 22) de sa position d'entretien (W) à sa position de fonctionnement (B1, B2).

14. Procédé selon la revendication 13,
**caractérisé en ce que**
entre les étapes a) et b) on a l'étape suivante :
d) prendre une ancienne bobine de ficelle (231) qui se trouve encore dans l'unité de nouage (21, 22) en la coulissant dans ou contre le sens d'engagement (93).

15. Procédé selon l'une des revendications 13-14,
**caractérisé en ce que**
entre les étapes b) et c) on a l'étape suivante :
e) enfiler la ficelle (231) dans l'unité d'alimentation (71, 72).
